# FASCICULE DE BREVET EUROPEEN

(11) **EP 0 711 787 B1**
(45) Date de publication et mention de la délivrance du brevet: **09.09.1998**
(21) Numéro de dépôt: 95402458.4
(22) Date de dépôt: 03.11.1995
(51) Int. Cl.: C08F 2/10, C08F 2/38

(54) **Procédé de préparation de polymères hydrosolubles**
Verfahren zur Herstellung von wasserlöslichen Polymeren
Process for preparing water-soluble polymers

(30) Priorité: 09.11.1994 FR 9413450
(43) Date de publication de la demande: 15.05.1996
(73) Titulaire: SOCIETE FRANCAISE HOECHST, 92800 Puteaux (FR)
(72) Inventeur: Mallo, Paul, F-78400 Chatou (FR); Allemand, Sophie, F-75010 Paris (FR)
(74) Mandataire: Santarelli, Marc

(56) Documents cités:
- EP-A- 0 368 697

## Description

La présente demande a pour objet un procédé de préparation de polymères hydrosolubles.

Dans plusieurs secteurs d'application, on utilise des polymères hydrosolubles de faibles masses moléculaires.

C'est le cas des produits appelés "builders" par l'homme du métier et employés dans les lessives, leur composition peut comprendre des polyacrylates, des copolymères d'acide acrylique et d'acide maléique, (Encyclopedia of Chemical Technology Kirk-Othmer, 4ème édition, vol.7, page 1077) et ils sont connus pour empêcher les salissures en suspension dans l'eau de se déposer à nouveau sur les surfaces lavées (c'est pourquoi ils sont appelés agents "anti -redéposition"), ainsi que pour leur effet adoucissant sur les eaux de lavage, ce qui facilite l'action de la molécule détergente.

C'est également le cas des dispersants utilisés pour le traitement de l'eau qui sont souvent des homo- ou copolymères de l'acide acrylique et de l'acide maléique (Encyclopedia of Chemical Technology Kirk-Othmer, 4ème édition, vol.8, pages 302-311).

Pour limiter le poids moléculaire et/ou le degré de réticulation de l'homo ou du copolymère formé, qui ont une grande influence sur leurs propriétés applicatives, il est usuel d'employer un agent de transfert de chaîne qui agit au cours du processus de polymérisation. Les mercaptans aliphatiques sont parmi les agents de transfert les plus utilisés industriellement.

Il est connu d'utiliser des agents de transfert comme le n-dodécyl mercaptan ou le tertio-dodécyl mercaptan dans les polymérisations en milieu organique ou dans les polymérisations en émulsion.

Etant donné l'insolubilité de ces agents de transfert dans l'eau, on est contraint, pour faire une polymérisation dans ce milieu, soit de les mettre préalablement en émulsion pour faciliter leur pénétration dans le milieu aqueux, soit de les employer en présence d'un cosolvant organique hydrosoluble comme l'acétone, ce qui suppose l'élimination du cosolvant en fin de synthèse et/ou une étape de préparation de l'émulsion.

Afin de remédier à ces inconvénients, il est connu d'employer des thiols hydrosolubles comme la thioglycérine, le 2-mercaptoéthanol, l'acide thioacétique, et l'acide thiosuccinique, ... pour faire des polymérisations dans l'eau (voir par exemple les brevets japonais JP 61126104 et JP 61118404).

Cependant, les thiols utilisés industriellement présentent l'inconvénient de conférer au produit une odeur caractéristique indésirable, même s'ils ne restent présents qu'en très faibles quantités dans le polymère final. Ces thiols sont donc la cause d'un problème de pollution olfactive sur le site de production des polymères, et leur utilisation requiert un post-traitement onéreux d'élimination des odeurs sur le produit fini.

Pour remédier à cet inconvénient, la demanderesse a proposé, dans FR-A-2 638 743 (EP0 368 697), d'employer le méthyl-2 tertiobutyl-5 thiophénol comme agent de transfert de chaîne, car contrairement aux autres thiophénols alkylés, celui-ci ne présente aucune odeur soufrée désagréable, tout en ayant de bonnes propriétés de transfert de chaîne.

Jusqu'à présent, le mode d'utilisation du méthyl-2 tertiobutyl-5 thiophénol, désigné ci-après thio PTBT, était la polymérisation en milieu organique, ou en émulsion car ce produit est insoluble dans l'eau.

La demanderesse a découvert avec étonnement un procédé de polymérisation en milieux aqueux, simple à mettre en oeuvre et peu onéreux, produisant des polymères de masses moléculaires contrôlées, sans présenter les problèmes d'odeurs nauséabondes liés à l'utilisation d'agents de transfert de la famille des thiols, et sans avoir à mettre l'agent de transfert en émulsion ou à faire la polymérisation en présence d'un cosolvant.

Par "préparation de polymères de masse moléculaires contrôlées" l'on entend un procédé permettant d'obtenir des polymères ayant la masse moléculaire que l'on souhaite, par simple ajustement des conditions expérimentales, et notamment de la quantité d'agent de transfert de chaîne utilisée, par rapport à un mode opératoire donné, en fonction notamment des monomères employés et de leur concentration.

La présente invention a pour objet un procédé de préparation d'un polymère ou d'un copolymère hydrosoluble de masse moléculaire contrôlée à partir de monomères hydrosolubles (principalement employés) caractérisé par le fait que la polymérisation se fait dans l'eau en solution aqueuse des monomères polymérisables, en présence d'au moins un initiateur radicalaire ou de type redox en présence de 0,0001 à 10 % en poids par rapport au poids total des monomères d'un agent de transfert de chaîne qui est le méthyl-2 tertiobutyl-5 thiophénol, et sans mettre en émulsion l'agent de transfert ou faire la polymérisation en présence d'un cosolvant.

La présente invention a pour objet un procédé de fabrication dans l'eau de polymères (à savoir d'homo-polymères ou de copolymères) hydrosolubles, que l'on désignera (P), à partir d'un ou plusieurs monomères hydrosolubles que l'on désignera M₁, M₂, M₃, ..., Mₘ (monomères principalement employés).

Les grandes classes de polymères hydrosolubles synthétiques ainsi que les monomères conduisant à leur fabrication ont été décrites dans "Encyclopedia of Polymer Science and Engineering", 2ème édition, vol. 17, Wiley Interscience, page 753 et suivantes. Par exemple (P) pourra désigner un polymère synthétisé à partir d'un ou plusieurs monomères tels que :
- les acides mono- et di- carboxyliques insaturés éthyléniques comme l'acide acrylique, l'acide méthacrylique, l'acide itaconique, l'acide maléique, l'acide fumarique,
- les amides des acides carboxyliques insaturés comme l'acrylamide, le méthacrylamide, le N-méthylolacrylamide ou -méthacrylamide,
- les monomères éthyléniques comportant un groupe acide sulfonique et leurs sels alcalins ou d'ammonium par exemple, l'acide vinylsulfonique, l'acide vinylbenzène sulfonique, l'acide α-acrylamido méthylpropane-sulfonique, le 2-sulfoéthylèneméthacrylate,
- les monomères éthyléniques insaturés comportant un groupe amino secondaire, tertiaire, quaternaire ou un groupe hétérocyclique contenant de l'azote, par exemple les vinylpyridines, le vinylimidazole, les (méth)acrylates d'aminoalkyle, salifiés ou quaternisés, et les (méth)-acrylamides d'aminoalkyle, salifiés ou quaternisés, comme les diméthylaminoéthylacrylates ou -méthacrylates, les diméthyl amino méthylacrylamides ou -méthacrylamides, salifiés ou quaternisés, de même que les monomères zwitterioniques comme l'acrylate de sulfopropyl (diméthyl) aminopropyle ..., ainsi qu'à partir des sels de métaux alcalins ou alcalino-terreux ou des sels d'amine des acides cités ci-dessus.

Par "(méth)acrylate d'aminoalkyle et (méth)acrylamide d'aminoalkyle salifiés ou quaternisés", on désigne les monomères salifiés par un acide comme par exemple l'acide chlorhydrique ou quaternisés, soit par le chlorure de méthyle, soit par le sulfate de diméthyle.

Selon une variante de l'invention, on peut, selon un procédé analogue au procédé décrit ci-dessus, préparer des polymères hydrophiles réticulés. Selon cette variante, en plus des monomères principaux cités, on met en oeuvre, en quantités mineures, comprises généralement entre 0,1 et 5 %, des monomères éthyléniques insaturés ayant un caractère réticulable tels que le (méth)acrylate de glycidyle ou les silanes vinyliques et acryliques, ou comprises entre 0,001 et 5 %, des monomères polyéthyléniques insaturés réticulables tels que le méthylène bis-acrylamide, le tétraallyloxyéthane ou le trimétholpropanetriacrylate.

La polymérisation est réalisée de manière connue en soi en solution aqueuse des monomères polymérisables en présence d'au moins un initiateur radicalaire et de l'agent de transfert, la concentration des monomères dans le milieu réactionnel étant comprise généralement entre 10 et 60 % en poids.

Tout type d'initiateur ou amorçeur à radicaux libres, habituel dans la polymérisation en solution aqueuse peut convenir. Les initiateurs peuvent être par exemple les hydroperoxydes tels que l'eau oxygénée, l'hydroperoxyde de cumène, l'hydroperoxyde de tertiobutyle, l'hydroperoxyde de diisopropylbenzène. Ces composés sont le plus souvent associés à un composé réducteur tel que le métabisulfite de sodium lorsque l'on fait un amorçage de type rédox.

On peut également utiliser des persels tels que les persulfates de sodium, de potassium ou d'ammonium. Ces derniers pourront être utilisés seuls, lorsque l'on procède à une décomposition thermique, ou également en association avec des composés réducteurs tels que le métabisulfite de sodium ou des sels ferreux dans le cadre d'un procédé rédox. On pourra aussi utiliser des initiateurs de type azoïque tels que l'azo-bis isobutyronitrile, le dichlorhydrate d'azo-bis-2,2' (amidino-2 propane), l'acide azo-bis-4, 4'cyano-4 pentanoïque.

La quantité de méthyl-2 tertiobutyl-5 thiophénol mise en oeuvre est comprise entre 0,0001 et 10 %, de préférence entre 0,02 et 2 % en poids par rapport au poids total des monomères, suivant le poids moléculaire et le degré de réticulation souhaité pour le polymère. Il peut être introduit dans le milieu réactionnel soit en totalité au début de la réaction, soit en continu en même temps que les monomères principaux, soit encore en partie initialement et en partie en continu.

L'emploi simultané d'un autre agent de transfert connu, avec le méthyl-2 tertiobutyl-5 thiophénol est possible selon le procédé de l'invention pour autant qu'il n'en résulte pas une odeur indésirable.

La température de polymérisation, Tp, fonction de l'initiateur mis en oeuvre, est généralement comprise entre 40 et 100°C, de préférence entre 50 et 70°C.

La polymérisation peut être réalisée en continu, en discontinu ou semi-continu avec introduction d'une partie des monomères en continu et être du type "ensemencé" ou "incrémental" selon toute variante connue pour l'obtention des particules de structure homogène et hétérogène.

Les solutions aqueuses de polymères et de copolymères inodores et les polymères ou copolymères qui peuvent être récupérés de la solution par tout moyen connu dans la technique, se caractérisent en ce que le polymère ou le copolymère contient des unités sulfure de méthyl-2 tertiobutyl-5 phényle.

La présente invention a enfin pour objet une solution aqueuse d'un polymère ou d'un copolymère directement obtenue par le procédé ci-dessus caractérisé en ce que ledit polymère ou copolymère contient des unités sulfure de méthyl-2 tertiobutyl-5 phényle. La solution aqueuse ne renferme ni agent émulsifiant, ni cosolvant.

D'une façon générale, les solutions de polymères obtenues par le procédé objet de l'invention sont introduites directement et sans post-traitement dans les eaux à traiter ou dans les compositions pour lessives.

Le méthyl-2 tertiobutyl-5 thiophénol commercialisé par la demanderesse peut être préparé selon le mode de synthèse proposé dans le brevet français N° 2 638 743 (EP0 368 697) dont la demanderesse est titulaire.

Les exemples qui suivent illustrent la présente invention.

### EXEMPLES

Les viscosités sont mesurées sur un viscosimètre Brookfield^{®} RVT à 20°C.

### EXEMPLE 1

Dans un réacteur en verre à double enveloppe, de volume 1 litre, équipé d'un système d'agitation, d'un thermomètre, d'un condenseur et d'une canne d'introduction d'azote, on introduit successivement :
- 333,4 g d'eau bidistillée
- 420,0 g d'une solution aqueuse à 80% en poids de méthosulfate de triméthylamino-2 éthyle méthacrylate, (MSM), à savoir le méthacrylate de diméthylaminoéthyle quaternisé par le sulfate de diméthyle.
- 0,2 g d'une solution aqueuse à 40 % en poids de diéthylène triaminopentaacétate de sodium (DTPA), commercialisé par la Société Dow Chemical sous le nom de VERSENEX^{®} 80.

L'ensemble est laissé sous agitation constante pendant 30 minutes sous barbotage d'azote. La température du milieu réactionnel est alors portée à 50°C et l'on y introduit successivement :
- 0,106 g de méthyl-2 tertiobutyl-5 thiophénol (thio PTBT)
- 1,441 g de chlorhydrate d'azo-bis-2,2'(amidino-2 propane) dissous dans 45 g d'eau (ABAH).

La polymérisation démarre et la température est maintenue à 50°C pendant 120 minutes.

Après refroidissement, on mesure la viscosité Brookfield de la solution : elle est de 7600 mPa.s.

### EXEMPLE 2

On procède comme à l'exemple 1 avec les réactifs suivants dans les quantités données :
- 667 g d'eau bidistillée,
- 85,3 d'acide acrylique glacial (AA),
- 0,2 g d'une solution aqueuse à 40% en poids d'acide diéthylène triaminopentaacétique (DTPA),
   puis
- 1,062 g de méthyl-2 tertiobutyl-5 thiophénol (thio PTBT),
- 1,441 g de dichlorhydrate d'azo-bis-2,2'(amidino-2 propane) dissous dans 45 g d'eau (ABAH).

La viscosité Brookfield est de 70 mPa.s.

### EXEMPLE 3

On reproduit l'exemple 2 en neutralisant préalablement à 90 % l'acide acrylique par une solution aqueuse à 32 % en poids d'ammoniaque, soit en ajoutant dans la solution de monomère 56,7 g de solution aqueuse à 32 % en poids d'ammoniaque.

L'acide acrylique neutralisé sera désigné AAN.

La viscosité Brookfield est de 400 mPa.s.

### TABLEAUX 1, 2 et 3 / EXEMPLES 1-1 à 1-6, 2-1 à 2-3, 3-1 à 3-6

On reproduit les exemples 1, 2 et 3 en faisant varier la nature et la quantité de l'agent de transfert.

A titre comparatif, on utilise dans certains exemples l'agent de transfert thio PTBT sous la forme d'une émulsion que l'on prépare en mélangeant sous agitation 50% en poids de thio PTBT, et 50 % en poids d'éther polyglycolique de tributylphénol ou SAPOGENAT^{®} T 110 commercialisé par la Société HOECHST.
- Cette forme émulsionnée du thio PTBT sera désignée thio PTBT Em dans les tableaux. La quantité d'agent de transfert indiquée sera calculée sur la base du thio PTBT seul introduit dans le milieu.
- Le n-dodécylmercaptan sera désigné NDM.
- L'acide mercapto acétique sera désigné AMA.
- Les résultats des essais sont résumés dans les tableaux N°1 à 3.

### INTERPRETATION

- Les pourcentages des réactifs sont calculés en nombre de moles de réactif par rapport au nombre de moles de monomères mis en jeu.
- La concentration est le pourcentage en poids de monomère par rapport au poids total de la solution.

Dans la colonne transfert :
- 0 signifie que l'on a fait la polymérisation sans agent de transfert,
- A/n signifie que l'on a utilisé n% en mole, par mole de monomère de l'agent de transfert A.
- La viscosité est exprimée en mPa.s.

**TABLEAU 1**

| Exemple | Monomère | Concentration | Transfert | DTPA | ABAH | Viscosité |
|---|---|---|---|---|---|---|
| 1-1 | MSM | 42 | ThioPTBT/0,05 | 1,34.10⁻⁴ | 0,45 | 7600 |
| 1-2 | MSM | 42 | ThioPTBT/0,5 | 1,34.10⁻⁴ | 0,45 | 700 |
| 1-3 | MSM | 42 | 0 | 1,34.10⁻⁴ | 0,45 | 56000 |
| 1-4 | MSM | 42 | ThioPTBTEm/0,05 | 1,34.10⁻⁴ | 0,45 | 13600 |
| 1-5 | MSM | 42 | ThioPTBTEm/0,5 | 1,34.10⁻⁴ | 0,45 | 820 |
| 1-6 | MSM | 42 | AMA/0,5 | 1,34.10⁻⁴ | 0,45 | 1900 |

**TABLEAU 2**

| Exemple | Monomère | Concentration | Transfert | DTPA | ABAH | Viscosité |
|---|---|---|---|---|---|---|
| 2-1 | AA | 10,7 | 0 | 1,34.10⁻⁴ | 0,45 | 110000 |
| 2-2 | AA | 10,7 | ThioPTBT/0,5 | 1,34.10⁻⁴ | 0,45 | 70 |
| 2-3 | AA | 10,7 | NDM/0,5 | 1,34.10⁻⁴ | 0,45 | 71000 |

**TABLEAU 3**

| Exemple | Monomère | Concentration | Transfert | DTPA | ABAH | Viscosité |
|---|---|---|---|---|---|---|
| 3-1 | AAN | 12,9 | 0 | 1,34.10⁻⁴ | 0,45 | 109000 |
| 3-2 | AAN | 12,9 | ThioPTBT/0,25 | 1,34.10⁻⁴ | 0,45 | 440 |
| 3-3 | AAN | 12,9 | ThioPTBT/0,5 | 1,34.10⁻⁴ | 0,45 | 400 |
| 3-4 | AAN | 12,9 | ThioPTBTEm/0,25 | 1,34.10⁻⁴ | 0,45 | 400 |
| 3-5 | AAN | 12,9 | ThioPTBTEm/0,5 | 1,34.10⁻⁴ | 0,45 | 240 |
| 3-6 | AAN | 12,9 | AMA/0,5 | 1,34.10⁻⁴ | 0,45 | 110 |

## Revendications

1. Procédé de préparation d'un polymère ou d'un copolymère hydrosoluble de masse moléculaire contrôlée à partir de monomères hydrosolubles (principalement employés) caractérisé par le fait que la polymérisation se fait dans l'eau en solution aqueuse des monomères polymérisables, en présence d'au moins un initiateur radicalaire ou de type redox en présence de 0,0001 à 10 % en poids par rapport au poids total des monomères d'un agent de transfert de chaîne qui est le méthyl-2 tertiobutyl-5 thiophénol, et sans mettre en émulsion l'agent de transfert ou faire la polymérisation en présence d'un cosolvant.

2. Procédé selon la revendication 1, caractérisé par le fait que le polymère hydrosoluble est un polymère synthétisé à partir d'un ou plusieurs des monomères choisis parmi :
- les acides mono- et di-carboxyliques insaturés éthyléniques,
- les amides des acides carboxyliques insaturés,
- les monomères éthyléniques comportant un groupe acide sulfonique et leurs sels alcalins ou d'ammonium,
- les monomères éthyléniques insaturés comportant un groupe amino secondaire, tertiaire, quaternaire ou un groupe hétérocyclique contenant de l'azote, salifiés ou quaternisés, de même que les monomères zwitterioniques,
ainsi que parmi les sels de métaux alcalins ou alcalino-terreux ou les sels d'amine des acides cités ci-dessus.

3. Procédé selon la revendication 1 ou 2, caractérisé par le fait que, en plus des monomères principalement employés pour faire la polymérisation, on met en oeuvre entre 0,1 et 5 % de monomères éthyléniques insaturés ayant un caractère réticulable, ou entre 0,001 et 5 % de monomères polyéthyléniques insaturés, ayant un caractère réticulable.

4. Procédé selon la revendication 1, caractérisé par le fait que la polymérisation est réalisée avec une concentration en monomères dans le milieu réactionnel comprise entre 10 et 60 % en poids.

5. Procédé selon l'une des revendications 1 à 4, caractérisé par le fait que l'initiateur est un hydroperoxyde ou un persel, associé à un composé réducteur.

6. Procédé selon l'une des revendications 1 à 5 caractérisé par le fait que la quantité de méthyl-2 tertiobutyl-5 thiophénol est comprise entre 0,02 et 2% en poids par rapport au poids total des monomères.

7. Procédé selon l'une quelconque des revendications 1 à 6, caractérisé par le fait que la température de polymérisation est comprise entre 40 et 100°C.

8. Procédé selon la revendication 7, caractérisé par le fait que la température de polymérisation est comprise entre 50 et 70°C.

9. Procédé selon l'une des revendications 1 à 8, caractérisé par le fait que l'on emploie simultanément avec le méthyl-2 tertiobutyl-5 thiophénol, un agent de transfert connu.

10. Solution aqueuse d'un polymère ou d'un copolymère directement obtenue par le procédé selon l'une quelconque des revendications 1 à 9, caractérisée en ce qu'elle ne renferme ni agent émulsifiant, ni cosolvant.

## Patentansprüche

1. Verfahren zur Herstellung eines wasserlöslichen Polymers oder Copolymers mit einer durch wasserlösliche (hauptsächlich eingesetzte) Monomere gesteuerten molaren Masse, dadurch gekennzeichnet, daß die Polymerisation im Wasser einer wäßrigen Lösung polymerisierbarer Monomere in Gegenwart mindestens eines radikalischen Initiators oder eines Redox-Initiators und in Gegenwart von 0,0001 bis 10 Gew.-%, bezogen auf das Gesamtgewicht der Monomeren, eines Kettenübertragungsreagens, das 2-Methyl-5-tert-butylthiophenol ist, durchgeführt wird, und ohne das Übertragungsreagens zu emulgieren oder die Polymerisation in Gegenwart eines Cosolvens durchzuführen.

2. Verfahren nach Anspruch 1, dadurch gekennzeichnet, daß das wasserlösliche Polymer ein Polymer ist, hergestellt mit einem oder mehreren Monomeren, ausgewählt aus:
- ethylenisch ungesättigten Mono- und Dicarbonsäuren,
- ungesättigten Carbonsäureamiden,
- Ethylenmonomeren, die eine Sulfonsäuregruppe tragen, und ihren Alkali- oder Ammoniumsalzen,
- ethylenisch ungesättigten Monomeren, die eine sekundäre, tertiäre, quartäre Aminogruppe oder eine Stickstoff enthaltende heterocyclische Gruppe tragen, in Form des Salzes oder quartemisiert, genauso wie die zwitterionischen Monomeren,
sowie die Alkalimetall- und Erdalkalimetallsalze oder die Aminsalze der oben genannten Säuren.

3. Verfahren nach Anspruch 1 oder 2, dadurch gekennzeichnet, daß zusätzlich zu den hauptsächlich zur Durchführung der Polymerisation verwendeten Monomeren zwischen 0,1 und 5 % ethylenisch ungesättigte Monomere, die vernetzbar sind, oder zwischen 0,001 und 5% polyethylenisch ungesättigte Monomere, die vernetzbar sind, eingesetzt werden.

4. Verfahren nach Anspruch 1, dadurch gekennzeichnet, daß die Polymerisation mit einer Monomerenkonzentration in der Reaktionsmischung von 10 bis 60 Gew.-% durchgeführt wird.

5. Verfahren nach einem der Ansprüche 1 bis 4, dadurch gekennzeichnet, daß der Initiator ein Hydroperoxid oder ein Persalz ist und mit einer reduzierenden Verbindung verknüpft ist.

6. Verfahren nach einem der Ansprüche 1 bis 5, dadurch gekennzeichnet, daß die Menge an 2-Methyl-5-tert-butylthiophenol von 0,02 bis 2 Gew.-%, bezogen auf das Gesamtgewicht der Monomeren, beträgt.

7. Verfahren nach irgendeinem der Ansprüche 1 bis 6, dadurch gekennzeichnet, daß die Polymerisationstemperatur von 40 bis 100°C beträgt.

8. Verfahren nach Anspruch 7, dadurch gekennzeichnet, daß die Polymerisationstemperatur von 50 bis 70°C beträgt.

9. Verfahren nach einem der Ansprüche 1 bis 8, dadurch gekennzeichnet, daß man gleichzeitig mit dem 2-Methyl-5-tert-butylthiophenol ein bekanntes Übertragungsreagens einsetzt.

10. Wäßrige Lösung eines Polymeren oder eines Copolymeren, unmittelbar erhalten durch das Verfahren nach irgendeinem der Ansprüche 1 bis 9, dadurch gekennzeichnet, daß sie weder ein Emulgiermittel, noch ein Cosolvens enthält.

## Claims

1. A method for preparing a water-soluble polymer or copolymer having a controlled molecular mass from water-soluble monomers (main components used), characterised by the fact that the polymerisation is performed in an aqueous solution of the polymerisable monomers in the presence of at least one radical initiator or a redox type initiator in the presence of 0.0001 to 10% by weight, relative to the total weight of monomers, of a chain transfer agent which is 2-methyl, 5-tertiarybutyl-thiophenol, and without emulsifying the transfer agent or performing the polymerisation in the presence of a co-solvent.

2. A method in accordance with claim 1, characterised by the fact that the water-soluble polymer is a polymer synthesised from one or more monomers chosen from the group comprising:
the unsaturated ethylenic mono- and di-carboxylic acids,
the amides of unsaturated carboxylic acids,
the ethylenic monomers comprising a sulphonic acid group and their alkaline or ammonium salts,
the unsaturated ethylenic monomers comprising a secondary, tertiary or quaternary amino group or a heterocylcic group containing nitrogen in a salt or quaternary form, and also zwitterionic monomers,
or also from the group comprising the alkaline metal or alkaline earth salts or the amine salts of the acids mentioned above.

3. A method in accordance with claim 1 or claim 2, characterised by the fact that, in addition to the monomers principally used to perform the polymerisation, between 0.1 and 5% of unsaturated ethylenic monomer which can be cross-linked is also used, or between 0.001 and 5% of unsaturated polyethylenic monomers which can be cross-linked is used.

4. A method in accordance with claim 1, characterised by the fact that the polymerisation is performed employing a concentration of monomers in the reaction medium which is between 10 and 60% by weight.

5. A method in accordance with any one of claims 1 to 4, characterised by the fact that the initiator is a hydroperoxide or salt of a peracid, in association with a reducing compound.

6. A method in accordance with any one of claims 1 to 5, characterised by the fact that the amount of 2-methyl, 5-tertiarybutyl-thiophenol is between 0.02 and 2% by weight relative to the total weight of monomers.

7. A method in accordance with any one of claims 1 to 6, characterised by the fact that the temperature of polymerisation is between 40 and 100°C.

8. A method in accordance with claim 7, characterised by the fact that the temperature of polymerisation is between 50 and 70°C.

9. A method in accordance with any one of claims 1 to 8, characterised by the fact that a known transfer agent is used simultaneously with the 2-methyl, 5-tertiarybutylthiophenol.

10. An aqueous solution of a polymer or a copolymer obtained directly by the method in accordance with any one of claims 1 to 9, characterised in that it contains neither an emulsifying agent nor a co-solvent.
